# EUROPÄISCHE PATENTSCHRIFT

(11) **EP 1 171 391 B1**
(45) Veröffentlichungstag und Bekanntmachung des Hinweises auf die Patenterteilung: **09.07.2003**
(21) Anmeldenummer: 00914157.3
(22) Anmeldetag: 22.03.2000
(51) Int. Cl.: C03B 29/02, C03B 29/00, C03B 29/08, C03B 32/00, C03B 23/025, C03B 23/035, C03B 37/029, C03B 5/235, C03B 5/42, C03B 5/033

(54) **VERFAHREN ZUR FORMGEBUNG VON GLASKERAMIKTEILEN UND/ODER GLASTEILEN**
METHOD OF FORMING GLASS-CERAMIC PARTS AND/OR GLASS PARTS
PROCEDE DE FORMAGE DE PIECES EN VITROCERAMIQUE ET/OU EN VERRE

(30) Priorität: 23.03.1999 DE 29905385 U; 19.08.1999 DE 19938811; 19.08.1999 DE 19938807
(43) Veröffentlichungstag der Anmeldung: 16.01.2002
(73) Patentinhaber: Schott Glas, 55122 Mainz (DE)
(72) Erfinder: FOTHERINGHAM, Ulrich, D-65191 Wiesbaden (DE); ESEMANN, Hauke, D-55286 Wörrstadt (DE); HOPPE, Bernd, D-55218 Ingelheim (DE); BADER, Hubertus, D-55128 Mainz (DE); HAHN, Gerhard, D-55595 Allenfeld (DE); GARSCHE-ANDRES, Markus, D-55271 Stadecken-Elsheim (DE); BRINKMANN, Matthias, D-55270 Klein-Winternheim (DE); GREULICH-HICKMANN, Norbert, D-55127 Mainz (DE)
(74) Vertreter: Dr. Weitzel & Partner
(86) Internationale Anmeldenummer: EP0002505
(87) Internationale Veröffentlichungsnummer: WO00056674

(56) Entgegenhaltungen:
- EP-A- 0 058 529
- EP-A- 0 112 224
- EP-A- 0 317 409
- EP-A- 0 376 509
- WO-A-98/57899
- DE-A- 2 432 538
- DE-B- 1 024 684
- DE-C- 740 892
- DE-C- 807 132
- FR-A- 802 598
- FR-A- 2 267 987
- FR-A- 2 386 492
- FR-A- 2 505 472
- FR-A- 2 606 866
- GB-A- 729 072
- GB-A- 2 320 021
- SU-A- 560 841
- SU-A- 660 949
- US-A- 1 630 724
- US-A- 1 953 023
- US-A- 2 125 912
- US-A- 2 131 873
- US-A- 2 973 190
- US-A- 3 045 994
- US-A- 3 120 433
- US-A- 3 193 367
- US-A- 4 983 202

## Beschreibung

Die Erfindung betrifft ein Verfahren zur Herstellung von Glaskeramikteilen und/oder Glasteilen mittels Verformung aus einem Glaskeramikrohling und/oder Glasrohling sowie eine Vorrichtung zur Durchführung des Verfahrens.

Die Formgebung von Glaskeramiken, insbesondere die 3D-Formgebung erfolgt nach einem ersten Verfahren gemäß dem Stand der Technik ausgehend vom glasigen Vorprodukt, da nach erfolgter Keramisierung des Glases eine Verformung im allgemeinen nur über den Umweg über die Schmelze wieder möglich ist.

Um das Ausgangsglas der Glaskeramik mit den für Glas üblichen Verformungsverfahren wie beispielsweise Schwerkraftsenken oder Vakuumsenken verformen zu können, wird dieses typischerweise auf Temperaturen um 1000° Celsius erhitzt, bei denen Kristallwachstum stattfindet, wenn vorher Keime gebildet worden sind. Beim Erwärmen des Ausgangsglases auf die Zieltemperatur von beispielsweise 1000° Celsius, bei der Kristallwachstum erfolgen kann, muß unvermeidbarerweise der Keimbildungsbereich, in dem kleinste Kristallisationskeime ausgeschieden werden und der zwischen 700° Celsius und 800° Celsius liegt, durchfahren werden.

Um zu verhindern, daß im kritischen Bereich der Keimbildung eine Keimung, die inhomogen sein kann, einsetzt und die Eigenschaften der aus dem nachfolgenden Keramisierungsprozeß hervorgehenden Glaskeramik negativ beeinflußt werden, oder daß es durch die Vorkeimung im anschließenden Formgebungsverfahren zur Kristallisation kommt und dieses dadurch unmöglich wird, muß der Keimbildungsbereich so schnell als möglich durchfahren werden.

Die Formgebung bei Gläsern erfolgt ausgehend von einem Glasrohling
mit den für Glas üblichen Verformungsverfahren wie beispielsweise Schwerkraftsenken oder Vakuumsenken, in dem der Glasrohling typischerweise auf Temperaturen oberhalb des Erweichungspunktes von beispielsweise 1000° C erhitzt wird.

Eine schnelle Aufheizung des Glaskeramikrohlinges bzw. des Glasrohlinges kann beispielsweise dadurch erreicht werden, daß leistungsstarke Oberflächenheizungen, wie beispielsweise Gasbrenner, verwendet werden.

Als Oberflächenheizung werden ganz allgemein solche Heizungen bezeichnet, bei denen mindestens 50 % der gesamten Wärmeleistung der Heizquelle in die Oberfläche beziehungsweise oberflächennahen Schichten des zu erwärmenden Objektes eingetragen werden.

Eine besondere Art einer Oberflächenheizung ist die oben beschriebene Erwärmung mit einer Gasflamme, wobei typischerweise die Flammtemperaturen bei 1000° Celsius liegen. Eine Erwärmung mittels Gasbrenner erfolgt zum größten Teil durch Übertragung der Wärmeenergie des heißen Gases über die Oberfläche des Glaskeramikrohlings bzw. Glasrohlings. Hierbei kann sich ein Temperaturgradient ergeben, der die Formgebung z.B. aufgrund von Viskositätsgradienten nachteilig beeinflussen kann. Insbesondere gilt dies für Glasdicken ≥ 5 mm.

Um eine schnelle Durchwärmung des Glas- bzw. Glaskeramikrohlinges mit Hilfe von Wärmeleitung zu erreichen, ist beim Gasbrenner ein hoher Leistungseintrag erforderlich. Eine derartige Erwärmung ist auf kleine Flächen beschränkt, da eine vollflächige Einbringung der erforderlichen Leistungsdichte mit Hilfe von Gasbrennern nicht möglich ist.

Die Erwärmung mit Gasbrennern ist somit, insbesondere nicht zur Herstellung komplexer 3D-Glaskeramiken geeignet, sondern auf einfache Geometrien beschränkt.

Weitere Nachteile der Erwärmung mit Gasbrennern sind beispielsweise:
- eine relativ unkontrollierte Beflammung,
- das Eintragen von Störgasen,
   die die Materialbeschaffenheit unerwünscht beeinflussen können.

Aus der US-A-3620706 ist das Tempern einer Pipettenspitze mit Hilfe von kurzweiliger IR-Strahlung bekannt geworden. Bei der aus US 3620706 bekannten Anordnung wirkt die IR-Strahlung direkt auf die Glasspitze ein.

Aus der GB-A-729 072 ist eine Ofenanordnung zur Beheizung insbesondere von Metallen, aber auch Keramiken und Gläsern bekannt geworden. Bei der Erwärmung gemäß der GB-A-729072 handelt es sich um eine reine Oberflächenerwärmung. Um die Oberfläche an den Stellen zu erwärmen, an denen keine Erwärmung durch die direkt einwirkende Strahlungsquelle erzielt wird, schlägt die GB-A-729072 vor, durch eine spezielle Form einer Reflektorenoberfläche, beispielsweise eines Kreisbogens, die Infrarot-Strahlung, gerichtet auf die Oberfläche des zu erwärmenden Gutes, zu reflektieren.

Eine andere Möglichkeit der Herstellung dreidimensional verformter Glaskeramiken besteht darin, diese während des Keramisierungsprozesses durch Auflegen auf die geeignete Form durchzuführen. Da hierbei jedoch nicht die eigentlich erforderlichen niedrigen Viskositäten auftreten, können zwar komplexe Geometrien geformt werden, jedoch nur mit sehr großen Biegeradien.

Aus der WO-A-9700407 ist die Nachverarbeitung von Glaskeramikvorstufen bekanntgeworden, wobei direkt an der Schmelzwanne das gewalzte Glasband bei Erreichen der erforderlichen Temperatur von hohen Temperaturen herkommend der Formgebung unterzogen wurde, noch bevor der kritische Bereich der Keimbildung bei der Glaskeramik erreicht wurde.

Nachteilig an dem aus der WO-A-9700407 bekannten Verfahren ist der außerordentlich hohe Aufwand, da direkt in den kontinuierlichen Prozeß der Formglasherstellung eingegriffen werden muß. Zudem ist eine vom Wannenbetrieb unabhängige, nachfolgende Formgebung beispielsweise zwischengelagerter Glaskeramikrohlinge nach deren Abkühlung durch erneutes Aufheizen nicht möglich.

Eine andere Möglichkeit der Herstellung dreidimensional verformter Gläser besteht darin, diese nicht aus einem Glasrohling, sondern bereits während des oder nach dem Schmelzprozeß durch Auflegen auf die geeignete Form durchzuführen.

So kann Glas direkt an der Schmelzwanne beispielsweise aus einem gewalzten Glasband einer Formgebung unterzogen werden.

Nachteilig an einem derartigen Verfahren ist, daß die Formgebung des Glases an den Wannenbetrieb gekoppelt ist.

Aufgabe der Erfindung ist, ein Verfahren und eine Vorrichtung zur Herstellung von Glaskeramikteilen und/oder Glasteilen mittels Verformung aus einem Glaskeramikrohling und/oder Glasrohling anzugeben, mit dem die zuvor beschriebenen Nachteile überwunden werden. Insbesondere soll das Verfahren folgende Möglichkeiten eröffnen:
* einen vom Wannenbetrieb unabhängigen, beispielsweise nachgeschalteten Betrieb
* komplexe 30-Verformungen auch mit kleinsten Biegeradien
* weitgehende Vermeidung störender Vorkeramisierung
* weitgehende Vermeidung störender Temperaturgradienten

Erfindungsgemäß wird die Aufgabe dadurch gelöst, daß bei einem Verfahren der eingangs genannten Art das Formgebungsverfahren unter Einsatz von IR-Strahlung durchgeführt wird, wobei die IR-Strahlung kurzwellige IR-Strahlung einer IR-Strahlungsquelle mit einer Farbtemperatur größer als 1500K, besonders bevorzugt größer als 2000K ist und ein Anteil der IR-Strahlung direkt sowie ein anderer Anteil indirekt auf den Glaskeramikrohling und/oder Glasrohling einwirkt, wobei der Anteil der indirekt auf den Glaskeramikrohling und/oder Glasrohling einwirkenden Strahlung mehr als 50 % der Gesamtstrahlungsleistung beträgt.

In einer ersten Ausgestaltung der Erfindung ist vorgesehen, daß das Formgebungsverfahren als Nachverarbeitung eines Glaskeramikrohlinges vor dessen Keramisierung erfolgt. Dies hat den Vorteil, daß das Glas jederzeit offline einer Verformung unterzogen werden kann.

Alternativ hierzu wäre die Durchführung der Verformung zusammen mit der Keramisierung des Glaskeramikrohlings.

Besonders vorteilhaft ist es, wenn der der Verformung unterzogene Glaskeramikrohling und/oder Glasrohling eine Glasplatte ist.

In einer weiteren Ausführungsform der Erfindung ist vorgesehen, daß die Verformung während des Erweichens eines Glasrohlings erfolgt.

Als Formgebungsverfahren sind sämtliche üblichen Formgebungsverfahren der Glasverarbeitung denkbar, beispielsweise das Verformen mittels Schwerkraftabsenkung, das durch Vakuum unterstützt sein kann. Man spricht dann von Vakuumsenken. Alternativ hierzu kann das Absenken in die Form mit Hilfe eines Pressstempels oder mit Hilfe des Einblasens von Luft erfolgen.

Neben einem Formgebungsprozeß durch Absenken in eine Form kann alternativ oder kombiniert mit dem Absenkungsprozeß eine gerichtete IR-Bestrahlung des zu formenden Glas- oder Glaskeramikrohlinges erfolgen, wodurch eine gezielte zonenweise Erwärmung und damit Formgebung vorgenommen werden kann.

Unterstützend oder alternativ zu einer gerichteten IR-Strahlung, können gezielt bestimmte Bereiche des Rohlinges durch Einbringen von entsprechend ausgestalteten Blenden erwärmt oder im Kalten gehalten werden.

Besonders bevorzugt ist es, wenn das gesamte Formgebungsverfahren in einem IR-Strahlungshohlraum durchgeführt wird und die Erwärmung mit Hilfe von IR-Strahlern als Strahlungsquellen erfolgt.

In einer Ausgestaltung der Erfindung ist vorgesehen, daß die Erwärmung des Glaskeramikrohlinges und/oder Glasrohlinges zum einen Teil direkt mit IR-Strahlung der IR-Strahler erfolgt und zum anderen Teil indirekt durch von den Wänden, der Decke und/oder dem Boden des IR-Strahlungshohlraumes reflektierte beziehungsweise rückgestreute IR-Strahlung.

Besonders vorteilhaft ist es, wenn der Anteil der indirekten, d. h. der rückgestreuten bzw. reflektierten Strahlung, die auf den zu erwärmenden Glas- bzw. Glaskeramikrohling einwirkt, mehr als 60 %, bevorzugt mehr als 70 %, besonders bevorzugt mehr als 80 %, besonders bevorzugt mehr als 90 %, insbesondere mehr als 98 % der Gesamtstrahlungsleistung beträgt,

Zur Homogenisierung der Temperatur kann eine Vorerwärmung beispielsweise in einem konventionellen Ofen vorgenommen werden.
Auch die Nacherwärmung eines geformten Glases bzw. einer geformten Glaskeramik ist denkbar.

Neben dem Verfahren stellt die Erfindung auch eine Vorrichtung zur Durchführung des Verfahrens zur Verfügung, die sich insbesondere dadurch auszeichnet, daß sie einen IR-Strahlungshohlraum mit die IR-Strahlung reflektierenden Wänden, Decke und/oder Boden umfaßt, wobei ein oder mehrere IR-Strahlern im IR-Strahlungshohlraum angeordnet sind und der Anteil der von den Wandflächen, dem Boden und/oder der Decke reflektierten und/oder gestreuten Infrarot-Strahlung mehr als 50 % der auf diese Flächen auftreffenden Strahlung beträgt. Gemäß der Erfindung weisen die IR-Strahler eine Farbtemperatur größer als 1500 K, besonders bevorzugt größer als 2000 K, ganz bevorzugt größer als 2400 K, insbesondere größer als 2700 K, insbesondere bevorzugt größer als 3000 K auf.

IR-Strahlungshohlräume zeigen beispielsweise die US-A-4789771 sowie die EP-A-0 133 847.

Besonders bevorzugt ist es, wenn der Anteil der von den Wandflächen, dem Boden und/oder der Decke reflektierten und/oder gestreuten Infrarot-Strahlung mehr als 90 %, insbesondere mehr als 98 %, beträgt.

Ein besonderer Vorteil der Verwendung eines IR-Strahlungshohlraumes ist, daß es sich bei Verwendung von sehr stark reflektierenden und/oder rückstreuenden Wand-, Boden- und/oder Deckenmaterialien um einen Resonator hoher Güte Q handelt, der nur mit geringen Verlusten behaftet ist und daher eine hohe Energieausnutzung gewährleistet.

Bei der Verwendung diffus rückstreuender Wand-, Decken- und/oder Bodenmaterialien wird eine besonders gleichmäßige Durchstrahlung aller Volumenelemente des Hohlraumes unter allen Winkeln erreicht. Damit werden etwaige Abschattungseffekte bei komplex geformten Glaskeramikteilen und/oder Glasteilen vermieden.

Als rückstreuendes, d. h. remittierendes Wandmaterial können beispielsweise geschliffene Quarzal-Platten mit beispielsweise einer Dicke von 30 mm Verwendung finden.

Auch andere die IR-Strahlung rückstreuende Materialien sind als Wand-, Deckenund/oder Bodenmaterialien oder Beschichtungen des IR-Strahlungshohlraumes möglich, beispielsweise eines oder mehrere der nachfolgenden Materialien:
Al₂O₃; BaF₂; BaTiO₃; CaF₂; CaTiO₃;
MgO · 3,5 Al₂O₃; MgO, SrF₂; SiO₂;
SrTiO₃; TiO₂; Spinell; Cordierit;
Cordierit-Sinterglaskeramik

Um eine Überhitzung der IR-Strahler zu vermeiden sind diese vorteilhafterweise gekühlt, insbesondere luft- oder wassergekühlt.

Zur gezielten Erwärmung des Glases bzw. der Glaskeramik beispielsweise mit Hilfe gerichteter Strahler ist vorgesehen, daß die IR-Strahler einzeln ausschaltbar, insbesondere in ihrer elektrischen Leistung regelbar sind.

Die Erfindung soll nachfolgend beispielhaft anhand der Figuren sowie der Ausführungsbeispiele beschrieben werden.

Es zeigen:
- Figur 1: die Planck-Kurve eines möglichen IR-Strahlers mit einer Temperatur von 2400 K.
- Figur 2A: den prinzipiellen Aufbau einer Heizvorrichtung gemäß der Erfindung mit Strahlungshohlraum.
- Figur 2B: die Remissionskurve über der Wellenlänge von Al₂O₃ Sintox AL der Fa. Morgan Matroc, Troisdorf, mit einem Remissionsgrad > 95 %, über einen weiten Spektralbereich > 98 %, im IR-Wellenlängenbereich.
- Figur 3A: die Aufheizkurve eines zu formenden Glaskeramikrohlings in einer Heizvorrichtung umfassend einen IR-Strahlungshohlraum.
- Figur 3B: die Aufheizkurve eines zu formenden Glasrohlings in einer Heizvorrichtung umfassend einen IR-Strahlungshohlraum.
- Figur 4A+B: Verformung eines Glaskeramikrohlings und/oder Glasrohlinges mit Schwerkraftsenken.
- Figur 5A+B: Verformung eines Glaskeramikrohlings und/oder Glasrohlinges mit Vakuumsenken
- Figur 6A+B: Verformung eines Glaskeramikrohlings und/oder Glasrohlinges mit
Senken, unterstützt durch ein Preßwerkzeug.
- Figur 7A+B: Verformung eines Glaskeramikrohlings und/oder Glasrohlinges mit Senken unterstützt durch Überdruck.
- Figur 8: Verformung eine Glaskeramikrohlings und/oder Glasrohlinges durch gerichtete IR-Strahler
- Figur 9: Verformung eines Glaskeramikrohlings und/oder Glasrohlinges in einem IR-Strahlungshohlraum mit Blende.

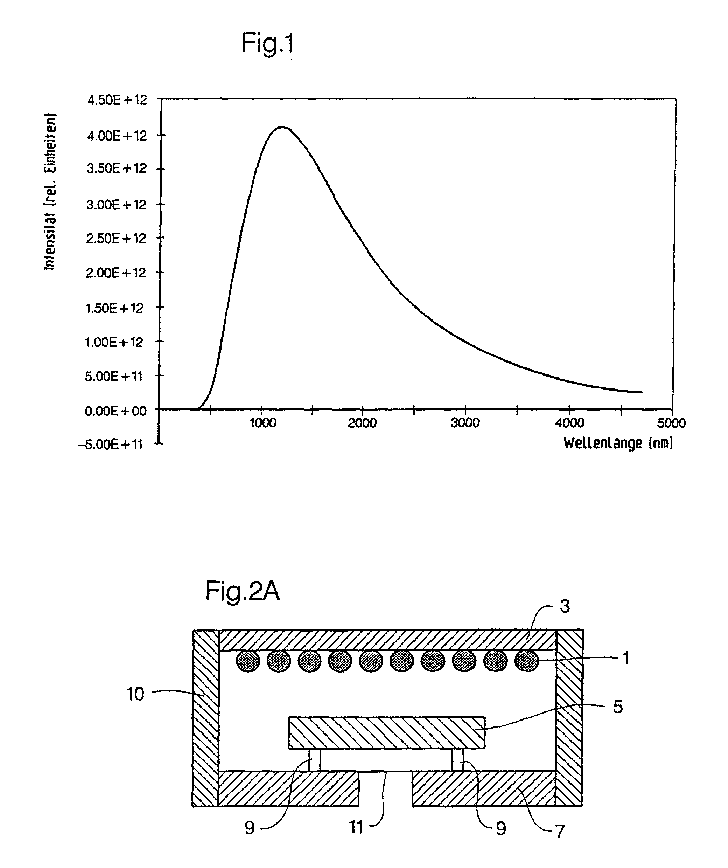

Figur 1 zeigt die Intensitätsverteilung einer IR-Strahlungsquelle, wie sie zur Erwärmung eines Glas- oder Glaskeramikrohlings für eine komplexe Formgebung gemäß der Erfindung verwendet werden kann. Die zur Anwendung gelangenden IR-Strahler können lineare Halogen IR-Quarzrohrstrahler mit einer Nennleistung von 2000 W bei einer Spannung von 230 V sein, welche bevorzugt eine Farbtemperatur von 2400 K besitzen. Diese IR-Strahler haben entsprechend dem Wienschen Verschiebungsgesetz ihr Strahlungsmaximum bei einer Wellenlänge von 1210 nm.

Bei dem erfindungsgemäßen Formgebungsverfahren befinden sich die Heizeinrichtung und das Glühgut beziehungsweise der zu formende Glasoder Glaskeramikrohling in einem mit IR-Strahlern bestückten IR-Strahlungshohlraum. Das setzt voraus, daß die Quarzglasstrahler selbst genügend temperaturbeständig oder entsprechend gekühlt sind. Das Quarzglasrohr ist bis etwa 1100° Celsius einsetzbar. Bevorzugt ist es, die Quarzglasrohre erheblich länger auszubilden als die Heizwendel und aus dem Heißbereich herauszuführen, so daß die Anschlüsse im Kaltbereich sind, um die elektrischen Anschlüsse nicht zu überhitzen. Die Quarzglasrohre können mit und ohne Beschichtung ausgeführt sein.

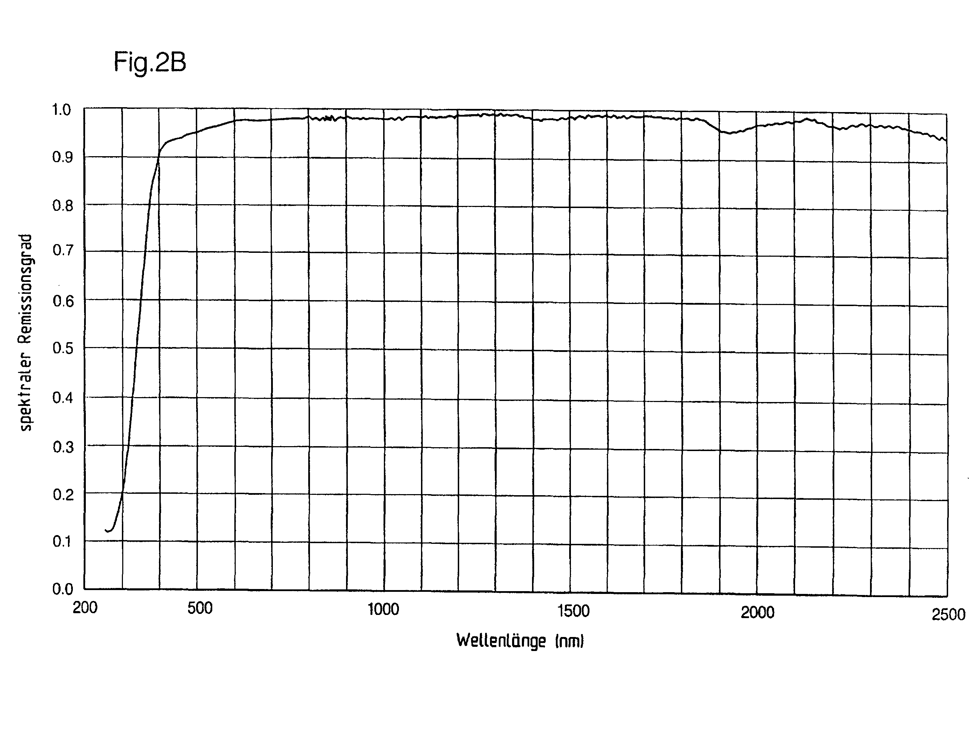

In Figur 2A ist eine erste Ausführungsform einer Heizvorrichtung für ein Formgebungsverfahren gemäß der Erfindung mit einem IR-Strahlungshohlraum dargestellt.

Die in Figur 2A dargestellte Heizvorrichtung umfaßt eine Vielzahl von IR-Strahlem 1, die unterhalb eines Reflektors 3 aus stark reflektierendem bzw. Stark rückstreuendem Material angeordnet sind. Durch den Reflektor 3 wird erreicht, daß die vom IR-Strahler in andere Richtungen abgegebene Leistung auf den Glas- bzw. Glaskeramikrohling gelenkt wird. Die von den IR-Strahlern abgegebene IR-Strahlung durchdringt teilweise den in diesem Wellenlängenbereich semitransparenten Glaskeramikrohling 5 bzw. Glasrohling 5 und trifft auf eine Trägerplatte 7 aus stark reflektierendem beziehungsweise stark streuendem Material. Besonders geeignet hierfür ist Quarzal, das auch im Infraroten ungefähr 90 % der auftreffenden Strahlung reflektiert. Alternativ hierzu könnte auch Al₂O₃ Verwendung finden, das einen Reflexionsgrad von ungefähr 98 % aufweist. Auf die Trägerplatte 7 wird der Glaskeramikrohling 5 bzw. Glasrohling 5 mit Hilfe von beispielsweise Quarzaloder Al₂O₃-Streifen 9 aufgesetzt. Die Temperatur der Unterseite kann durch ein Loch 11 in der Trägerplatte mittels eines Pyrometers gemessen werden.

Die Wände 10 können zusammen mit Reflektor 3 als Decke und Trägerplatte 7 als Boden bei entsprechender Ausgestaltung mit reflektierendem oder diffus rückstreuendem Material bzw. Quarzal oder Al₂O₃ einen IR-Strahlungshohlraum hoher Güte ausbilden.

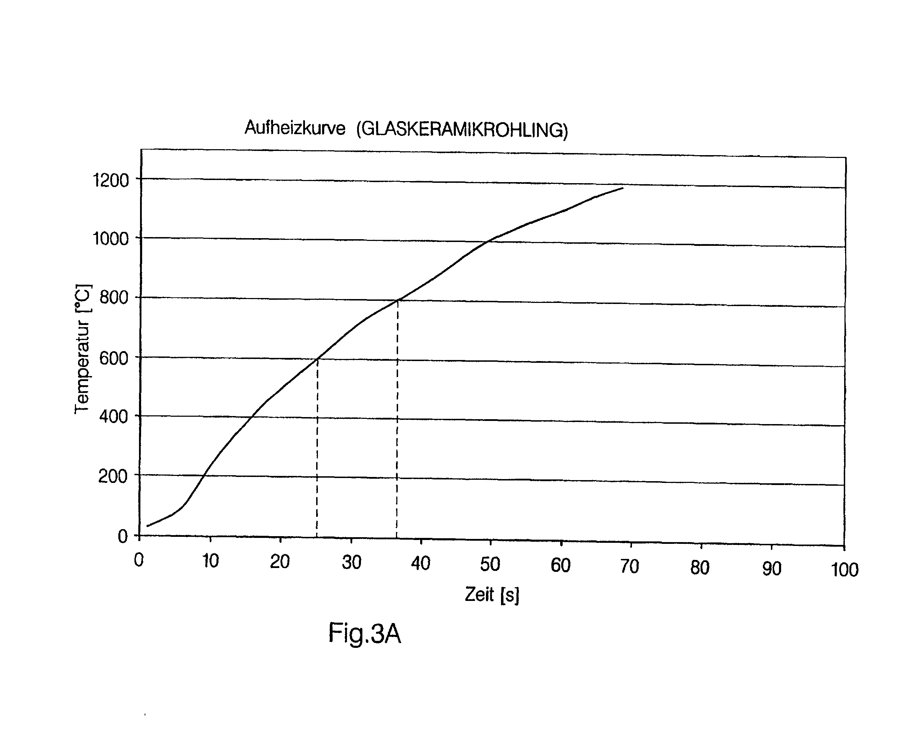

Figur 3A zeigt die Heizkurve eines umzuformenden Glaskeramikrohlinges gemäß einem erfindungsgemäßen Verfahren, wobei der umzuformende Glaskeramikrohling Abmessungen von etwa 200 mm bei einer Dicke von 4 mm aufwies.

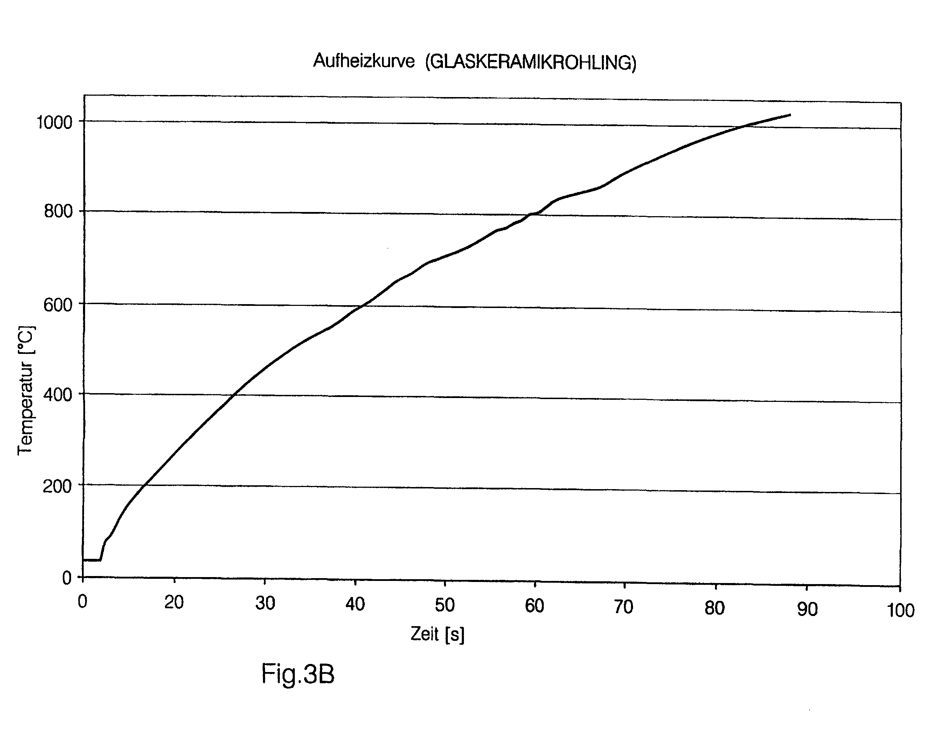

Figur 3B zeigt die Heizkurve eines umzuformenden Glasrohlinges gemäß einem erfindungsgemäßen Verfahren, wobei die zu formende Glasprobe Abmessungen von etwa 200 mm bei einer Dicke von 4 mm aufwies.

Das Heizverfahren beziehungsweise die Wärmebehandlung erfolgte wie nachfolgend beschrieben:

Die Erwärmung der umzuformenden und gegebenenfalls im Anschluß zu keramisierenden Glaskeramikrohlingen bzw. der zu formenden Glasrohlinge erfolgte zunächst in einem mit Quarzal umbauten IR-Strahlungshohlraum gemäß Figur 2A, dessen Decke durch einen Aluminiumreflektor mit darunter befindlichen IR-Strahlern gebildet wurde. Die Proben wurden in geeigneter Art und Weise auf Quarzal gelagert.

Im IR-Strahlungshohlraum wurden die Glas- bzw. Glaskeramikrohlinge durch mehrere Halogen IR-Strahler direkt angestrahlt, die sich in einem Abstand von 10 mm bis 150 mm über den umzuformenden Glas- bzw. Glaskeramikrohlingen befanden.

Das Aufheizen des jeweiligen Glaskeramikrohlinges bzw. Glasrohlinges fand nunmehr mittels Ansteuerung der IR-Strahler über einen Thyristorsteller auf

Grundlage von Absorptions-, Reflexions- und Streuprozessen statt, wie nachfolgend eingehend beschrieben:

Da die Absorptionslänge der verwendeten kurzwelligen IR-Strahlung im Glas sehr viel größer ist als die Abmessungen der zu erwärmenden Gegenstände, wird der größte Teil der auftreffenden Strahlung durch die Probe hindurchgelassen. Da andererseits die absorbierte Energie pro Volumen an jedem Punkt des Glases nahezu gleich ist, wird eine über das gesamte Volumen homogene Erwärmung erzielt. Bei dem Versuch gemäß Figur 3A und 3B für die umzuformende Glaskeramik bzw. Glasprobe befinden sich die IR-Strahler und der zu erwärmende Glas- bzw. Glaskeramikrohling in einem Strahlungshohlraum, dessen Wände, Boden und/oder Decke aus einem Material mit einer Oberfläche hoher Reflektivität bestehen, wobei zumindest ein Teil der Wand-, Boden und/oder Deckenfläche die auftreffende Strahlung überwiegend diffus zurückstreut. Dadurch gelangt der überwiegende Teil der zunächst von dem Glas- bzw. Glaskeramikrohling hindurchgelassenen Strahlung nach Reflexion beziehungsweise Streuung an der Wand, Boden und/oder Decke erneut in den zu erwärmenden Gegenstand und wird wiederum teilweise absorbiert. Der Weg der auch beim zweiten Durchgang durch den Glas- bzw. Glaskeramikrohling hindurchgelassenen Strahlung setzt sich analog fort. Mit diesem Verfahren wird nicht nur eine in der Tiefe homogene Erwärmung erreicht, sondern auch die eingesetzte Energie deutlich besser als bei nur einfachem Durchgang durch den Glas- bzw. Glaskeramikrohling ausgenutzt.

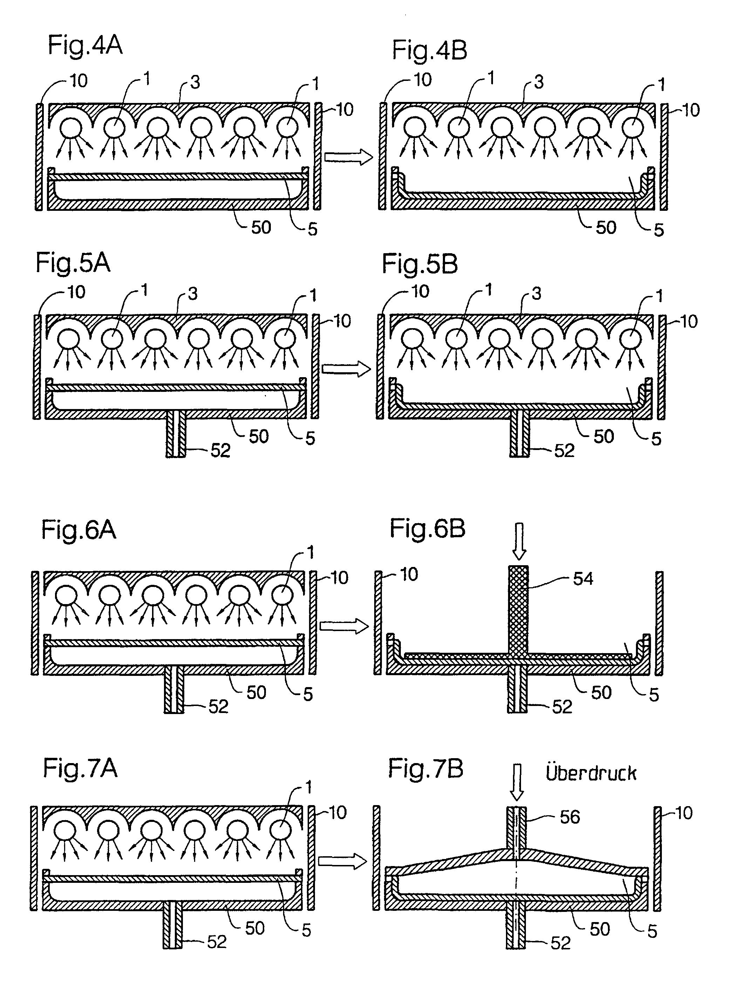

In Figur 4A und 4B ist der Aufbau für eine Formgebung eines Glas- bzw. Glaskeramikrohlinges 5 in einem IR-Strahlungshohlraum mit IR-Heizstrahlern 1 mit Hilfe von Schwerkraftsenken dargestellt.

Die IR-Strahler 1 sind im Strahlungshohlraum oberhalb des zu formenden Glaskeramikrohlings 5 bzw. Glasrohlinges 5 angeordnet. Oberhalb der IR-Strahler 1 befinden sich Reflektoren 3.

Die IR-Strahler 1 erwärmen den Glaskeramikrohling 5 bzw. Glasrohling 5 von der Oberseite. Die Form 50, in die der Rohling 5 sinkt, ist mit IRreflektierendem Material ebenso wie die Wände 10 des IR-Strahlungshohlraumes beschichtet. Die auf die Wände 10 beziehungsweise die Form 50 auftreffende IR-Strahlung wird zu einem Anteil von mehr als 50 %, vorzugsweise 90 bzw. 95 %, besonders bevorzugt 98 % reflektiert. Die zurückreflektierte Strahlung erwärmt beim nochmaligen Durchgang wiederum den Glaskeramikrohling bzw. den Glasrohling.

Wird eine bestimmte Temperatur in dem Glaskeramikrohling bzw. Glasrohling überschritten, so senkt sich der erwärmte Glaskeramikrohling bzw. Glasrohling in die Form 50 aufgrund seiner Schwerkraft ab wie in Figur 4 B dargestellt.

Bei Glaskeramikrohlingen kann der Formgebungsprozeß sowohl vor der Keramisierung durchgeführt werden oder aber auch zusammen mit dem Keramisierungsprozeß.

Nach Abschluß des Formgebungsprozesses wird das geformte Glas- bzw. Glaskeramikteil nach Abstellen der Beheizung mittels der IR-Strahler aus der Form entnommen.

Eine Nachbeheizung im Ofen ist denkbar.

Der Formungsprozeß kann durch Anlegen von Vakuum, wie in den Figuren 5 A und 5 B dargestellt, unterstützt werden.

Hierzu ist vorgesehen, unterhalb des zu formenden Glaskeramikrohlinges 5 bzw. Glasrohlinges 5 in der Form einen Vakuumanschluß 52 vorzusehen.

Die Schwerkraftabsenkung nach Erwärmung durch die IR-Strahler wird durch Anlegung eines Vakuums unterstützt.

Alternativ hierzu kann vorgesehen sein, wie in Figur 6 A und 6 B dargestellt, den Verformungsprozeß mit einem Pressstempel 54 zu unterstützen. Hierzu werden vorteilhafterweise nach Erwärmung der Platte die IR-Strahler, die sich oberhalb der zu erwärmenden Platte befinden, verfahren und anschließend mit Hilfe des Presswerkzeuges beziehungsweise Pressstempels 52 die erwärmte Platte 5 in die Form abgesenkt.

Alternativ zum Verfahren der IR-Strahler, könnte auch die Form mit der erwärmten Platte verfahren werden.

Anstelle eines Absenkens mit einem Pressstempel 54 kann wie in Figur 7 A und 7 B dargestellt, vorgesehen sein, durch Einblasen eines Überdruckes mit Hilfe eines Blaswerkzeuges 56 die erwärmte Platte in die Form zu bringen.

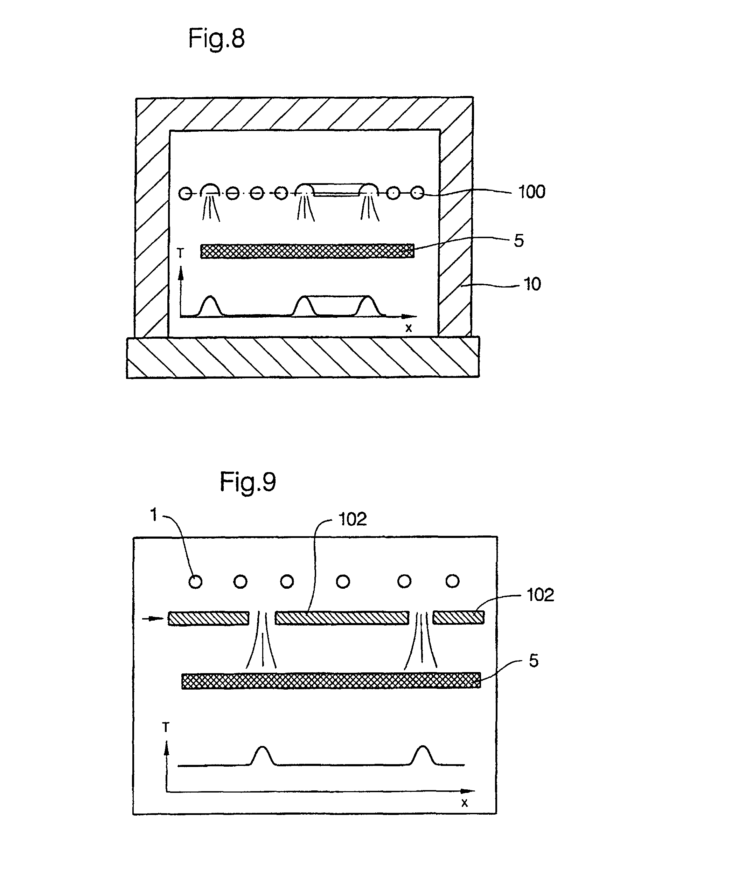

In Figur 8 ist die selektive Aufheizung eines Glaskeramikrohlinges bzw. Glasrohlinges mit Hilfe von gerichteten IR-Strahlern 100 gezeigt.

Durch eine derart gerichtete Aufheizung können die Verformungsprozesse in ganz bestimmten Bereichen des zu formenden Glaskeramikrohlings bzw. Glaserohlings in Gang gesetzt werden. Durch Einzelansteuerung der gerichteten IR-Strahler 100 ist es möglich, über eine Fläche verteilt Temperaturprofile in dem zu formenden Glaskeramikrohling bzw. Glasrohling herzustellen und so der Glaskeramik bzw. dem Glas eine beliebige, vorbestimmte Form zu geben.

Anstelle von gerichteten und einzeln angesteuerten IR-Strahlern können auch Blenden 102 vorgesehen sein, die zwischen die IR-Strahler 1und die Oberseite der zu erwärmenden Platte 5 eingebracht werden.

Eine derartige Ausgestaltung der Erfindung ist in Figur 9 dargestellt.

Mit dem erfindungsgemäßen Verfahren werden Materialtemperaturen im Bereich von 1150 Grad Celsius bis 1200 Grad Celsius und darüber erreicht, wobei sich auch erreichen läßt, daß die Temperaturinhomogenität im Werkstück vor dem Formgebungsprozess +/- 10 K nicht überschreitet.

Bei der Entnahme des geformten Glaskeramikteiles bzw. Glasteiles beträgt die Temperatur der geformten Glaskeramik bzw. des geformten Glases vorzugsweise weniger als 250 Grad Celsius, die Abkühlgeschwindigkeit der Glaskeramik bzw. des Glases bei ausgeschaltetem Strahler liegt vorzugsweise oberhalb von 150 Grad Celsius pro Minute.

Die Aufheizung eines Glaskeramik- bzw. Glasrohlings mit Hilfe der IR-Strahlungsmethode dauert vorzugsweise weniger als 60 Sekunden, und die Kühlung vorzugsweise weniger als 180 Sekunden. Die Kühlung kann sowohl außerhalb wie innerhalb des Aggregates erfolgen. Damit lassen sich Taktzeiten von 60 sec bei Kühlung außerhalb des Aggregates und von weniger als 5 min bei Kühlung innerhalb des Aggregates erreichen.

Mit Hilfe des erfindungsgemäßen Verfahrens können beispielsweise rinnenförmige Bauteile mit einem Kreisbogenquerschnitt von r kleiner als 150 mm bei einer Weite des Bauteiles kleiner 200 mm realisiert werden sowie beispielsweise rinnenförmige Bauteile aus Glaskeramik bzw. Glas mit rechteckigem beziehungsweise trapezförmigem Querschnitt geformt werden.

Auch komplexe Verformungen dreidimensionaler Art sind möglich.

## Patentansprüche

1. Verfahren zur Herstellung von Glaskeramikteilen und/oder Glasteilen mittels Verformung aus einem Glaskeramik- und/oder Glasrohling,
**dadurch gekennzeichnet, daß**
das Formgebungsverfahren unter Einsatz von IR-Strahlung durchgeführt wird, wobei die IR-Strahlung kurzwellige Infrarot-Strahlung einer IR-Strahlungsquelle (1) mit einer Farbtemperatur größer als 1500 K, besonders bevorzugt größer als 2000 K ist und ein Anteil der IR-Strahlung direkt sowie ein anderer Anteil indirekt auf den Glaskeramikrohling und/oder Glasrohling (5) einwirkt, wobei der Anteil der indirekt auf den Glaskeramikrohling und/oder Glasrohling (5) einwirkenden Strahlung mehr als 50 % der Gesamtstrahlungsleistung beträgt.

2. Verfahren nach Anspruch 1, **dadurch gekennzeichnet, daß**
das Formgebungsverfahren als Nachverarbeitung eines Glaskeramikrohlinges (5) vor dessen Keramisierung erfolgt.

3. Verfahren nach Anspruch 1, **dadurch gekennzeichnet, daß**
das Formgebungsverfahren zusammen mit der Keramisierung eines Glaskeramikrohlinges (5) erfolgt.

4. Verfahren nach einem der Ansprüche 1 bis 3, **dadurch gekennzeichnet, daß** der Glaskeramikrohling und/oder der Glasrohling (5) eine Glasplatte ist.

5. Verfahren nach einem der Ansprüche 1 oder 4,
**dadurch gekennzeichnet, daß**
das Formgebungsverfahren während des Erweichens eines Glasrohlings (5) erfolgt

6. Verfahren nach einem der Ansprüche 1 bis 5, **dadurch gekennzeichnet, daß** das Formgebungsverfahren Schwerkraftsenken umfaßt.

7. Verfahren nach einem der Ansprüche 1 bis 6, **dadurch gekennzeichnet, daß**
das Formgebungsverfahren Vakuumsenken umfaßt.

8. Verfahren nach einem der Ansprüche 1 bis 7, **dadurch gekennzeichnet, daß**
das Formgebungsverfahren das Senken mit Pressstempel umfaßt.

9. Verfahren nach einem der Ansprüche 1 bis 8, **dadurch gekennzeichnet, daß**
das Formgebungsverfahren Blassenken umfaßt.

10. Verfahren nach einem der Ansprüche 1 bis 9, **dadurch gekennzeichnet, daß**
das Formgebungsverfahren eine gerichtete IR-Bestrahlung des zu formenden Glaskeramikrohlinges und/oder Glasrohlinges umfaßt.

11. Verfahren nach einem der Ansprüche 1 bis 10, **dadurch gekennzeichnet, daß**
das Formgebungsverfahren die Verwendung von zwischen den IR-Strahlem (1) und dem Glas- oder Glaskeramikrohling (5) angebrachten Blenden (102) umfasst.

12. Verfahren nach einem der Ansprüche 1 bis 11, **dadurch gekennzeichnet, daß**
das Formgebungsverfahren in einem IR-Strahlungshohlraum durchgeführt wird.

13. Verfahren nach Anspruch 12, **dadurch gekennzeichnet, daß**
die Strahlungsbeheizung mit Hilfe von im Strahlungshohlraum angeordneten IR-Strahlem (1) durchgeführt wird.

14. Verfahren, nach einem der Ansprüche 1 bis 13, **dadurch gekennzeichnet, daß** der Glaskeramikrohling und/oder Glasrohling (5) vorgewärmt wird.

15. Verfahren nach Anspruch 14, **dadurch gekennzeichnet, daß** der Glaskeramikrohling und/oder Glasrohling (5) in einem konventionellen Ofen vorgewärmt wird.

16. Verfahren nach einem der Ansprüche 1 bis 15, **dadurch gekennzeichnet, daß** die Glaskeramik und/oder das Glas nach der Formgebung nachbeheizt wird.

17. Verfahren nach Anspruch 16, **dadurch gekennzeichnet, daß** die Glaskeramik und/oder das Glas in einem konventionellen Ofen nachbeheizt wird.

18. Vorrichtung zur Durchführung des Verfahrens. gemäß einem der Ansprüche 1 bis 17, **dadurch gekennzeichnet, daß**
die Vorrichtung umfaßt:
18.1 einen IR-Strahlungshohlraum mit die IR-Strahlung reflektierenden bzw. rückstreuenden Wänden (10) und/oder Decke und/oder Boden (7),
18.2 einen oder mehrere IR-Strahler (1), die IR-Strahlung mit einer Farbtemperatur größer als 1500 K, besonders bevorzugt größer als 2000 K abstrahlen, wobei
18.3 die Reflektivität bzw. das Rückstreuvermögen der Wände (10) und/oder Decke und/oder Boden (7) mehr als 50 % der auftreffenden Strahlung beträgt.

19. Vorrichtung nach Anspruch 18, **dadurch gekennzeichnet, daß**
die Reflektivität bzw. das Rückstreuvermögen der Wände (10) und/oder Decke und/oder Boden (7) mehr als 90 % bzw. 95 %, insbesondere mehr als 98 % der auftreffenden Strahlung beträgt.

20. Vorrichtung nach Anspruch 18 oder 19,
**dadurch gekennzeichnet, dass** die IR-Strahler eine Farbtemperatur größer als 2400 K, insbesondere größer als 2700 K, insbesondere bevorzugt größer als 3000 K aufweisen.

21. Vorrichtung nach einem der Ansprüche 18 bis 20, **dadurch gekennzeichnet, daß** das Material der Wand (10) und/oder der Decke und/oder des Bodens (7) diffus rückstreuend ist.

22. Vorrichtung nach einem der Ansprüche 18 bis 21, **dadurch gekennzeichnet, daß**
die reflektierenden bzw. rückstreuenden Wände (10) und/oder Decke und/oder Boden (7) eines oder mehrere der nachfolgenden Materialien umfassen:
Al₂O₃; BaF₂; BaTiO₃; CaF₂; CaTiO₃;
MgO · 3,5 Al₂O₃; MgO; SrF₂; SiO₂;
SrTiO₃; TiO₂; Spinell; Cordierit;
Cordierit-Sinterglaskeramik.

23. Vorrichtung gemäß einem der Ansprüche 18 bis 22, **dadurch gekennzeichnet, daß**
die IR-Strahler (1) gekühlt, insbesondere luft- oder wassergekühlt sind.

24. Vorrichtung nach einem der Ansprüche 18 bis 23, **dadurch gekennzeichnet, daß**
die IR-Strahler (1) einzeln ansteuerbar und in ihrer elektrischen Leistung regelbar sind.

## Claims

1. Process for producing glass-ceramic parts and/or glass parts by deformation from a glass-ceramic and/or glass blank, **characterized in that** the forming process is carried out using IR radiation, the IR radiation being short-wave infrared radiation from an IR radiation source (1) with a colour temperature of greater than 1500 K, particularly preferably greater than 2000 K, and a proportion of the IR radiation acting directly and another proportion acting indirectly on the glass-ceramic blank and/or glass blank (5), the proportion of the radiation which acts indirectly on the glass-ceramic blank and/or glass blank (5) amounting to more than 50% of the total radiation output.

2. Process according to Claim 1, **characterized in that** the forming process takes place as reworking of a glass-ceramic blank (5) before it is ceramicized.

3. Process according to Claim 1, **characterized in that** the forming process takes place together with the ceramicization of a glass-ceramic blank (5).

4. Process according to one of Claims 1 to 3, **characterized in that** the glass-ceramic blank and/or the glass blank (5) is a glass plate.

5. Process according to one of Claims 1 or 4, **characterized in that** the forming process takes place during the softening of a glass blank (5).

6. Process according to one of Claims 1 to 5, **characterized in that** the forming process comprises gravity sinking.

7. Process according to one of Claims 1 to 6, **characterized in that** the forming process comprises vacuum sinking.

8. Process according to one of Claims 1 to 7, **characterized in that** the forming process comprises sinking using a press ram.

9. Process according to one of Claims 1 to 8, **characterized in that** the forming process comprises blow sinking.

10. Process according to one of Claims 1 to 9, **characterized in that** the forming process comprises targeted IR irradiation of the glass-ceramic blank and/or glass blank which is to be formed.

11. Process according to one of Claims 1 to 10, **characterized in that** the forming process comprises the use of diaphragms (102) arranged between the IR radiators (1) and the glass or glass-ceramic blank (5).

12. Process according to one of Claims 1 to 11, **characterized in that** the forming process is carried out in an IR radiation cavity.

13. Process according to Claim 12, **characterized in that** the radiation heating is carried out with the aid of IR radiators (1) arranged in the radiation cavity.

14. Process according to one of Claims 1 to 13,
**characterized in that** the glass-ceramic blank and/or glass blank (5) is preheated.

15. Process according to Claim 14, **characterized in that** the glass-ceramic blank and/or glass blank (5) is pre-heated in a conventional furnace.

16. Process according to one of Claims 1 to 15,
**characterized in that** the glass-ceramic and/or the glass is reheated after the forming operation.

17. Process according to Claim 16, **characterized in that** the glass-ceramic and/or the glass is reheated in a conventional furnace.

18. Device for carrying out the process according to one of Claims 1 to 17, **characterized in that** the device comprises:
18.1 an IR radiation cavity with walls (10) and/or ceiling and/or base (7) which reflect(s) or back-scatter(s) the IR radiation,
18.2 one or more IR radiators (1) which radiate the IR radiation with a colour temperature of greater than 1500 K, particularly preferably greater than 2000 K, wherein
18.3 the reflectivity or back-scattering capacity of the walls (10) and/or ceiling and/or base (7) amounts to more than 50% of the incident radiation.

19. Device according to Claim 18, **characterized in that** the reflectivity or back-scattering capacity of the walls (10) and/or ceiling and/or base (7) amounts to more than 90% or 95%, in particular more than 98%, of the incident radiation.

20. Device according to Claim 18 or 19, **characterized in that** the IR radiators have a colour temperature of greater than 2400 K, in particular greater than 2700 K, particularly preferably greater than 3000 K.

21. Device according to one of Claims 18 to 20, **characterized in that** the material of the wall (10) and/or the ceiling and/or the base (7) is diffusely back-scattering.

22. Device according to one of Claims 18 to 21, **characterized in that** the reflecting or back-scattering walls (10) and/or ceiling and/or base (7) comprise one or more of the following materials:
Al₂O₃;BaF₂;BaTiO₃;CaF₂;CaTiO₃;
MgO·3.5Al₂O₃;MgO;SrF₂;SiO₂;
SrTiO₃;TiO₂;spinel;cordierite;
cordierite-sintered glass-ceramic.

23. Device according to one of Claims 18 to 22, **characterized in that** the IR radiators (1) are cooled, in particular air-cooled or water-cooled.

24. Device according to one of Claims 18 to 23, **characterized in that** the IR radiators (1) can be actuated individually and their electrical power can be controlled.

## Revendications

1. Procédé de fabrication de pièces en vitrocéramique et/ou de pièces en verre au moyen du façonnage d'une ébauche en vitrocéramique et/ou en verre, **caractérisé en ce que** le procédé de formage est réalisé en mettant en oeuvre du rayonnement IR, le rayonnement IR étant un rayonnement infrarouge de courte longueur d'onde d'une source de rayonnement IR (1) ayant une température de couleur supérieure à 1 500 K, de manière particulièrement préférée supérieure à 2 000 K, et une proportion du rayonnement IR agit directement sur l'ébauche en vitrocéramique et/ou l'ébauche en verre (5) et une autre proportion agit indirectement sur celles-ci, la proportion du rayonnement agissant indirectement sur l'ébauche en vitrocéramique et/ou l'ébauche en verre (5) constituant plus de 50% de la puissance de rayonnement totale.

2. Procédé selon la revendication 1, **caractérisé en ce que** le procédé de formage se réalise en tant que post-traitement d'une ébauche en vitrocéramique (5) avant sa céramisation.

3. Procédé selon la revendication 1, **caractérisé en ce que** le procédé de formage se réalise conjointement avec la céramisation d'une ébauche en vitrocéramique (5).

4. Procédé selon l'une quelconque des revendications 1 à 3, **caractérisé en ce que** l'ébauche en vitrocéramique et/ou l'ébauche en verre (5) est une plaque de verre.

5. Procédé selon l'une quelconque des revendications 1 ou 4, **caractérisé en ce que** le procédé de formage se réalise pendant le ramollissement d'une ébauche en verre (5).

6. Procédé selon l'une quelconque des revendications 1 à 5, **caractérisé en ce que** le procédé de formage comprend un enfoncement par gravité.

7. Procédé selon l'une quelconque des revendications 1 à 6, **caractérisé en ce que** le procédé de formage comprend un enfoncement par le vide.

8. Procédé selon l'une quelconque des revendications 1 à 7, **caractérisé en ce que** le procédé de formage comprend l'enfoncement avec une presse à matricer.

9. Procédé selon l'une quelconque des revendications 1 à 8, **caractérisé en ce que** le procédé de formage comprend un enfoncement par soufflage.

10. Procédé selon l'une quelconque des revendications 1 à 9, **caractérisé en ce que** le procédé de formage comprend une irradiation IR dirigée de l'ébauche en vitrocéramique et/ou de l'ébauche en verre à former.

11. Procédé selon l'une quelconque des revendications 1 à 10, **caractérisé en ce que** le procédé de formage comprend l'utilisation d'écrans (102) appliqués entre les émetteurs IR (1) et l'ébauche en verre ou en vitrocéramique (5).

12. Procédé selon l'une quelconque des revendications 1 à 11, **caractérisé en ce que** le procédé de formage est réalisé dans une cavité de rayonnement IR.

13. Procédé selon la revendication 12, **caractérisé en ce que** le chauffage par irradiation est réalisé à l'aide d'émetteurs IR (1) disposés dans la cavité de rayonnement.

14. Procédé selon l'une quelconque des revendications 1 à 13, **caractérisé en ce que** l'ébauche en vitrocéramique et/ou l'ébauche en verre (5) sont préchauffées.

15. Procédé selon la revendication 14, **caractérisé en ce que** l'ébauche en vitrocéramique et/ou l'ébauche en verre (5) sont préchauffées dans un four classique.

16. Procédé selon l'une quelconque des revendications 1 à 15, **caractérisé en ce que** la vitrocéramique et/ou le verre sont chauffés a posteriori après le formage.

17. Procédé selon la revendication 16, **caractérisé en ce que** la vitrocéramique et/ou le verre sont chauffés a posteriori dans un four classique.

18. Dispositif pour réaliser le procédé selon l'une quelconque des revendications 1 à 17, **caractérisé en ce que** le dispositif comprend :
18.1 une cavité de rayonnement IR avec des parois (10) et/ou un plafond et/ou un fond (7) réfléchissant ou rétrodiffusant le rayonnement IR,
18.2 un ou plusieurs émetteurs IR (1), qui émettent un rayonnement IR ayant Une température de couleur supérieure à 1 500 K, de manière particulièrement préférée supérieure à 2 000 K,
18.3 la réflectivité ou le pouvoir de rétrodiffusion des parois (10) et/ou du plafond et/ou du fond (7) étant supérieur à 50 % du rayonnement incident.

19. Dispositif selon la revendication 18, **caractérisé en ce que** la réflectivité ou le pouvoir de rétrodiffusion des parois (10) et/ou du plafond et/ou du fond (7) est supérieur à 90 % ou 95 %, en particulier supérieur à 98 % du rayonnement incident.

20. Dispositif selon la revendication 18 ou 19, **caractérisé en ce que** les émetteurs IR présentent une température de couleur supérieure à 2 400 K, en particulier supérieure à 2 700 K, de manière particulièrement préférée supérieure à 3 000 K.

21. Dispositif selon l'une quelconque des revendications 18 à 20, **caractérisé en ce que** le matériau de la paroi (10) et/ou du plafond et/ou du fond (7) est rétrodiffusant de façon diffuse.

22. Dispositif selon l'une quelconque des revendications 18 à 21, **caractérisé en ce que** les parois (10) et/ou le plafond et/ou le fond (7) rétrodiffusants ou réfléchissants comprennent une ou plusieurs des matières suivantes :
Al₂O₃ ; BaF₂ ; BaTiO₃ ; CaF₂ ; CaTiO₃ ;
MgO · 3,5Al₂O₃ ; MgO ; SrF₂ ; SiO₂ ;
SrTiO₃ ; TiO₂ ; la spinelle ; la cordiérite ;
la vitrocéramique frittée à base de cordiérite.

23. Dispositif selon l'une quelconque des revendications 18 à 22, **caractérisé en ce que** les émetteurs IR (1) sont refroidis, en particulier refroidis par air ou par eau.

24. Dispositif selon l'une quelconque des revendications 18 à 23, **caractérisé en ce que** les émetteurs IR (1) peuvent être pilotés et régulés individuellement en ce qui concerne leur puissance électrique.
